Europäisches Patentamt

European Patent Office

Office européen des brevets

(11) Veröffentlichungsnummer: **0 283 558**
**A2**

(12) **EUROPÄISCHE PATENTANMELDUNG**

(21) Anmeldenummer: 87114795.5

(22) Anmeldetag: 09.10.87

(51) Int. Cl.⁴ **B01J 49/00** , C05C 1/00 ,
//C05D11/00

(30) Priorität: 23.03.87 HU 127287

(43) Veröffentlichungstag der Anmeldung:
28.09.88 Patentblatt 88/39

(84) Benannte Vertragsstaaten:
AT CH DE FR LI SE

(71) Anmelder: **Fövarosi Tavfütö Müvek**
**Kalotaszeg u. 31**
**Budapest XI(HU)**

(72) Erfinder: **Gerl, Arpád**
**Rezsü u. 58**
**Budapest II(HU)**

(74) Vertreter: Hansen, Bernd, Dr.rer.nat. et al
Hoffmann, Eitle & Partner Patentanwälte
Arabellastrasse 4 Postfach 81 04 20
D-8000 München 81(DE)

(54) **Verfahren zur Regenerierung von Ionenaustauschern und der landwirtschaftlichen Nutzung des Regenerates.**

(57) Die Erfindung betrifft ein umweltfreundliches Verfahren zur Regenerierung von Ionenaustauschern und der landwirtschaftlichen Nutzung des Regenerates.

Erfindungsgemäß werden als Regenerierflüssigkeit wäßrige Lösungen von pflanzliche Hauptnährelemente enthaltenden Salzen, vorzugsweise handelsüblichen Kunstdüngern, und/oder ebenfalls pflanzliche Nährelemente enthaltenden Säuren und/oder Laugen verwendet, das anfallende Regenerat wird notwendigenfalls neutralisiert und entweder direkt als flüssiger Kunstdünger ausgebracht oder als Zusatz zu Düngerkompositionen verwendet.

Auf diese Weise wird ein volkswirtschaftlich so wichtiges Produkt wie Kunstdünger zweimal hintereinander genutzt, ohne daß dazu besondere Vorkehrungen getroffen werden müssen. Der Hauptvorteil ist, daß keine stark NaCl-haltigen Lösungen entstehen, deren Vernichtung, Aufarbeitung bzw. endgültige Lagerung Schwierigkeiten verursacht.

# Verfahren zur Regenerierung von Ionenaustauschern und der landwirtschaftlichen Nutzung des Regenerates

Die Erfindung betrifft ein Verfahren zur Regenerierung von Ionenaustauscherharzen und der landwirtschaftlichen Nutzung des Regenerates. Mit dem Verfahren können sowohl Kationen-wie auch Anionenaustauscherharze regeneriert werden.

Hauptanwendungsgebiet der Erfindung ist die Bereitung von Kesselspeisewasser und Auffüllwasser für Heizwerke, Heizkraftwerke, Wärmekraftwerke und Fernheizsysteme und die energieproduzierende Industrie, jedoch kann es überall angewendet werden, wo die Notwendigkeit besteht, Wasser mittels Ionenaustauschern ganz oder teilweise von den in ihm enthaltenen Ionen zu befreien.

Die zur partiellen oder kompletten Wasserenthärtung verwendeten Ionenaustauscher müssen, wenn sie völlig mit Ionen beladen, d.h. erschöpft sind, regeneriert werden. Bei der Auswahl der Regeneriermittel war noch vor nicht allzu langer Zeit das wichtigste Kriterium der Preis. Deshalb wurden im allgemeinen Natriumchlorid, Natriumhydroxyd, Natriumcarbonat, Salzsäure, Schwefelsäure oder Gemische der aufgeführten Substanzen verwendet. Die entstandenen Regenerate wurden höchstens neutralisiert und dann in die Abwässerkanäle oder die freien Gewässer geleitet. Die Wasserreinigungsanlagen 15-20 Jahre alter Kraftwerke und Heizwerke sind zum größten Teil noch für diese Technologie dimensioniert und gebaut. Die 5-10 %igen Natriumchlorid-und Natriumsulfatlösungen wurden dann mit anderem Abwasser (zum Beispiel Kühlwasser, Badewasser) weiter verdünnt .

Mit der immer stärker werdenden Entfaltung des Umweltschutzes wurden jedoch auch zum Schutze der Wasserqualität strenge Vorschriften erlassen. Salzhaltiges Industrieabwasser, das in Abwasserkanäle geleitet wird, darf höchstens 0,15 % Salz enthalten und muß annähernd neutral sein.

Schon in mittelgroßen Fernheizwerken fallen jährlich tausende Kubikmeter etwa 10 %iger Kochsalzlösung an, deren Entsorgung Schwierigkeiten bereitet.

Theoretisch bestünde die Möglichkeit, die Regenerierlösung, eventuell nach einer Zwischenlagerung, mit Abwasser und Leitungswasser (Trinkwasser) so lange zu verdünnen, bis die vorgeschriebene Konzentrationsgrenze unterschritten ist. Dies läßt sich aus Gründen der Wasserparsamkeit nicht durchführen. Wie Berechnungen zeigten, wären dazu etwa 77-97 % des Nachfüllwassers des gesamten Primärfernleitungsnetzes erforderlich, d.h. der Wasserverbrauch des Heizwerkes würde sich fast verdoppeln.

Es sind auch Verfahren zur Reinigung der verwendeten Chemikalien und ihrer erneuten Verwendung bekannt. Gemäß der ungarischen Patentschrift Nr. 177 506 werden Calcium und Magnesium mit Soda in Form von $CaCO_3$ bzw. $MgCO_3$ ausgefällt. Der Sodaüberschuß wird dann mit Salzsäure neutralisiert. Wie im Labor durchgeführte Modellversuche ergaben, ist der Chemikalienbedarf des Verfahrens hoch, die erforderlichen Filter-, Lagerungs-und $CO_2$-Absaugvorrichtungen sind teuer, und die endgültige Lagerung des entstehenden Carbonatniederschlages bereitet Schwierigkeiten.

Die Behandlung mit Filtermembranen ist für die Zwecke der Energie-und Fernheizwerke aus Kostengründen nicht geeignet. Außerdem muß das entstehende Konzentrat dann ebenfalls entsorgt werden.

Schließlich besteht noch die Möglichkeit, die Salzlösungen zur Enteisung der Straßen im Winter zu verwenden. Wegen des Saisoncharakters dieser Verwendung ist der Versuch dazu noch nicht ernsthaft gemacht worden, denn die im Sommer anfallenden Mengen müßten dann zwischengelagert werden. Ein Ausschütten der Lösungen in landwirtschaftlich genutzten ist nicht möglich; Ausschütten auf Sand-und Kiesböden würde zu einer Erhöhung des Salzgehaltes des Grundwassers führen.

Aufgabe der Erfindung war es, Regeneriermittel zum Regenerieren von Ionenaustauschern zu finden, die ein umweltfreundliches, verwertbares Regenerat ergeben und daneben billig und leicht zugänglich sind.

Die Erfindung beruht auf der Erkenntnis, daß pflanzliche Hauptnährelemente enthaltende Salze, vorzugsweise handelsübliche Kunstdünger, sowie pflanzliche Hauptnährelemente enthaltende Säuren und Basen in Form wässriger Lösungen zur Regenerierung von Ionenaustauschern ausgezeichnet geeignet sind, weil sie ein Regenerat ergeben, das landwirtschaftlich verwendet werden kann.

Gegenstand der Erfindung ist demnach ein Verfahren zur Regenerierung von Ionenaustauschern und der landwirtschaftlichen Nutzung des Regenerates. Für das erfindungsgemäße Verfahren ist kennzeichnend, daß man zum Regenerieren die wässrige Lösung von pflanzliche Hauptnährelemente enthaltenden Salzen, vorzugsweise Kunstdüngern, und/oder ebenfalls pflanzliche Nährelemente enthaltenden Säuren und/oder Laugen verwendet und das anfallende Regenerat nach einer notwendigenfalls vorgenommenen Neutralisierung entweder direkt als Flüssig dünger ausbringt oder als Zusatz zu Düngerkompositionen verwendet.

Als pflanzliche Hauptnährelemente enthaltendes Salz kommt insbesondere Kalidünger in Frage, der als Lösung mit 5-15 % KCl-Gehalt auf die erschöpfte Ionenaustauscherfüllung aufgegeben wird, nachdem diese durch im Gegenstrom geführtes Wasser etwas aufgelockert wurde. Es ist zweckmäßig, die KCl-Lösung unter Erwärmen zu bereiten, da einesteils die negative Lösungkswärme von KCl beträchtlich ist, zum anderen seine Löslichkeit mit ansteigender Temperatur exponentiell besser wird. Als weitere Salze können Kaliumnitrat-und Natriumnitrat-Kunstdünger angeführt werden.

Als pflanzliche Nährelemente enthaltende Säuren und Laugen kommen zum Beispiel Salpetersäure, Phosphorsäure beziehungsweise Kaliumhydroxyd und Ammoniumhydroxyd in Frage.

Ionenaustauscher in Neutralform ($Na^+$-Form beziehungsweise nach der erfindungsgemäßen Regenerierung in $K^+$-Form) werden, wenn sie erschöpft sind, mit wäßrigen Lösungen von Düngersalzen regeneriert. Das Regenerat enthält erstens den Überschuß des verwendeten Düngersalzes, zweitens den Calcium-und Magnesiumgehalt des vorher an dem Ionenaustauscher gereinigten Wassers und drittens Spurenelemente. Die Mikronährelemente und Spurenelemente wie Eisen, Mangan, Kupfer, Zink, Kobalt, Molybdän sind in vorgereinigtem Flußwasser, Grundwasser immer vorhanden; während der Wasserenthärtung reichern sie sich in dem Ionenaustauscher an und gelangen beim Regenerieren ins Regenerat. Das Regenerat ist daher wertvoller als normale Kunstdüngerlösungen, die diese Elemente nicht enthalten.

Abhängend von der Zusammensetzung des Rohwassers und dem zu erreichenden Ziel (Teilentsalzung, Vollentsalzung, Carbonatfreiheit, Carbonatverringerung) kann es auch erforderlich sein, Ionenaustauscher in der $H^+$-Form oder der $OH^-$-Form einzusetzen. Erstere werden mit einer der genannten Säuren, letztere mit einer der genannten Laugen regeneriert. Es ist klar, daß die dabei anfallenden Regenerate vor ihrer Verwendung in der Landwirtschaft neutralisiert werden müssen. Wenn man zum Neutralisieren ebenfalls pflanzliche Hauptnährelemente enthaltende Chemikalien verwendet (also zum Beispiel ein salpetersaures Regenerat mit Ammoniak neutralisiert, oder ein ammoniakalisches mit Phosphorsäure), so erhält man eine wertvolle Volldüngerlösung.

Die. Verwendung der gegebenenfalls neutralisierten Regenerate in der Landwirtschaft kann durch direktes Ausbringen als Flüssigdünger erfolgen. Die Regenerate können jedoch auch in Düngerkompositionen wie zum Beispiel angereichertem Torf, Fäkalien-oder Stalldünger, ferner in Düngern auf Tonmineralbasis und in Bodenverbesserungsmitteln verwendet werden. Diese Verwendung in Kompositionen ist deshalb wichtig, weil die Regenerate das ganze Jahr über anfallen, die Flüssigdüngung jedoch saisonbedingt ist. Die mit der Lösung angereicherten Torfkompositionen sind besonders in der Hobbygärtnerei sehr beliebt.

Die Erfindung hat folgende Hauptvorteile.

Ein volkswirtschaftlich so wichtiges Produkt wie Kunstdünger wird zweimal hintereinander genutzt, ohne daß dazu besondere Vorkehrungen getroffen werden müssen. Der Kunstdünger wird aufgelöst, zum Regenerieren erschöpfter Ionenaustauscher verwendet und anschließend seiner eigentlichen Bestimmung zugeführt. Dadurch ist der Chemikalienverbrauch der Regenerierung gleich Null. Hervorzuheben ist, daß mit dem erfindungsgemäßen Verfahren die Entstehung der stark NaCl-haltigen Regenerate vermieden wird, das heißt, das Verfahren ist umweltfreundlich. Hervorzuheben ist schließlich, daß alle diese Vorteile praktisch nichts kosten, da die ganze Technologie der Wasseraufbereitung die gleiche bleibt. Lediglich eine geringe Lagerkapazität ist auszubauen, und für den Abtransport der Lösungen an den Ort der Verwendung (zum Beispiel eine Großgärtnerei) muß gesorgt werden.

Die Erfindung wird an Hand der folgenden Beispiele näher erläutert.

## Beispiel 1

### Wasserenthärtung durch Kationenaustausch

In eine zylinderförmige, 2000 mm hohe Ionenaustauschervorrichtung von 625 mm Durchmesser werden 0,46 m³ des perlenförmigen Kationenaustauschers VARION KS (Matrix: Poly(Styrol/Divinylbenzol), aktive Gruppe: $-SO_3^- H^+$) eingefüllt. Die Wasserenthärtung erfolgt bei einer Temperatur von 18 °C und einer Strömungsgeschwindigkeit von 45 m/h und einem Durchsatz von 13,8 m³/h. Der Ionengehalt das Wassers vor und nach der Enthärtung ist folgender:

| Ion | vor der Enthärtung | nach |
|---|---|---|
| Natrium (Mol/m$^3$) | 0,47 | 0,46 |
| Kalium (Mol/m$^3$) | 0,09 | 4,41 |
| Calcium (Mol/m$^3$) | 1,44 | 0,008 |
| Magnesium (Mol/m$^3$) | 0,72 | 0,002 |
| Eisen + Mangan (g/m$^3$) | <0,3 | <0,3 |
| Hydrogencarbonat (Mol/m$^3$) | 3,70 | 3,70 |
| Chlorid (Mol/m$^3$) | 0,54 | 0,54 |
| Sulfat (Mol/m$^3$) | 0,32 | 0,32 |
| Nitrat (Mol/m$^3$) | 0,01 | 0,01 |

Wie man sieht, werden die $Ca^{++}$-und $Mg^{++}$-Ionen gegen $K^+$-Ionen ausgetauscht (Würde man auf die übliche Weise mit NaCl regenerieren, so wären statt dessen $Na^+$-Ionen im Wasser).

Nach Herstellung von 159,7 m$^3$ enthärtetem Wasser wird die Füllung des Ionenaustauschers in der gleichen Strömungsrichtung regeneriert. Dazu wird aus 180 kg Kaliumschlorid-Kunstdünger (A-K, entsprechend dem ungarischen Standard Nr. MSZ 6275) mit 1,8 m$^3$ Wasser bei 30 °C eine 10 %ige Lösung bereitet, deren Dichte 1,0598 beträgt. Diese Lösung durchströmt den Ionenaustauscher mit einer Geschwindigkeit von 2,5 m/h. Die Menge entspricht einem Chemikalienüberschuß von 250 % (eigene Versuche ergaben, daß die praktische Nutzkapazität des Harzes VARION KS 0,75 Mol/l beträgt.)

Das vom Auflockerungs-und Waschwasser getrennt gesammelte Regenerat hat folgende Zusammensetzung:
Kaliumchlorid 7,16 %
Calciumchlorid 1,41 %
Magnesiumchlorid 0,61 %
Natriumchlorid 0,10 %.

Kalium ist ein pflanzliches Hauptnährelement, und auch Calcium und Magnesium sind pflanzliche Nährstoffe. Der Natriumgehalt ist unbedeutend.

Mit dem Regenerat wird Torf (Fundort: Nádasladány, Ungarn) getränkt. Man verwendet jeweils so viel Regenerat, daß das Torf bei 50 % Wassergehalt 2 Gew.-% Kunstdünger enthält (ungarischer Standard MSZ 08 0015-78). Das Torf ist für Gartenbauzwecke, zum Düngen von Zierpflanzen, dem Umtopfen von Zimmerblumen ausgezeichnet geeignet.

## Beispiel 2

### Wasserenthärtung von Kationenaustauschern zur Verminderung des Carbonatgehaltes (Teilstromverfahren)

3,70 Mol/m$^3$ Hydrogencarbonat enthaltendes Rohwasser soll auf einen Hydrogencarbonatgehalt von 0,2 Mol/m$^3$ enthärtet werden (genaue Zusammensetzung s. weiter unten). Zu diesem Zweck werden zwei Ionenaustauschervorrichtungen (2000 mm hoch, Ø 625 mm) mit je 0,46 m$^3$ VARION KS gefüllt. Zwischen beiden wird eine Lufteinblasvorrichtung zum Entfernen des $CO_2$ angebracht. Der eine Austauscher ist mit Harz in $H^+$-Form, der andere mit Harz in $K^+$-Form gefüllt. Es hängt von der Zusammensetzung des Rohwassers und der zu erreichen gewünschten Carbonatfreiheit ab, in welchem Verhältnis die die beiden Austauscher durchlaufenden Teilströme zueinander stehen müssen. Das Verhältnis errechnet sich wie folgt:

$$\frac{H^+\text{-Teilstrom}}{K^+\text{-Teilstrom}} = \frac{m_1 - m_2}{(-m) + m_2}$$

$m_1$ ist die m-Basizität des Rohwassers, $m_2$ die zu erreichen gewünschte m-Basizität und (-m) der Gehalt an freier Säure nach Durchlaufen des $H^+$-Harzes. [Die m-Basizität ($HCO_3^-$ und $CO_3^{--}$) wird gegen Methylorange titriert, daher m-Basizität. Der Gehalt an freier Säure (-m) ist die Summe von $Cl^-$, $SO_4^{--}$ und $NO_3^-$, azsgedrückt in Milli äquivalenten.]

Für Wasser der weiter unten angegebenen Qualität ergibt sich

$$\frac{m_1 - m_2}{(-m) + m_2} = \frac{3,70 - 0,20}{1,19 + 0,20} = 2,52.$$

$H^+$-Teilstrom und $K^+$-Teilstrom verhalten sich demnach wie 2,52 : 1, d.h. 71,6 % des Wassers müssen den $H^+$-Austauscher durchlaufen.

Die Vorrichtung mit dem $H^+$-Harz muß demnach 2,52 mal so häufig regeneriert werden wie die Vorrichtung mit dem $K^+$-Harz. Wenn die Zusammensetzung des Rohwassers konstant ist, ist es jedoch günstiger, eine 2000 mm hohe Vorrichtung von 1000 mm Durchmesser zu verwenden und diese mit 1,16 $m^3$ Harz im $H^+$-Zyklus zu füllen.

| Ion | vor | nach |
|---|---|---|
| | der Enthärtung | |
| Natrium ($Mol/m^3$) | 0,46 | 0,13 |
| Kalium ($Mol/m^3$) | 0,09 | 1,25 |
| Calcium ($Mol/m^3$) | 1,44 | 0,01 |
| Magnesium ($Mol/m^3$) | 0,72 | 0,004 |
| Fe + Mn ($g/m^3$) | 0,3 | 0,3 |
| Hydrogencarbonat ($Mol/m^3$) | 3,70 | 0,20 |
| Chlorid ($Mol/m^3$) | 0,54 | 0,56 |
| Sulfat ($Mol/m^3$) | 0,32 | 0,32 |
| Nitrat ($Mol/m^3$) | 0,01 | 0,01 |

Beide Kationenaustauscher werden mit einem Chemikalienüberschuß von 250 % regeneriert, und zwar das Harz in $K^+$-Form mit der Lösung von 180 kg Kalidünger (A-K, der Qualität gemäß ungarischem Standard MSZ 6275) in 1,8 $m^3$ Wasser, und die Säule in $H^+$-Form mit 6 %iger Salpetersäure (hergestellt aus 234,1 kg 65 %iger Salpetersäure durch Verdünnen mit 2,3 $m^3$ Wasser). Die beiden Regenerate werden vereinigt. Die stark saure Flüssigkeit wird mit 25 %igem wässrigem Ammoniak neutralisiert. Dadurch ergibt sich ein zusätzlicher Gehalt an Ammoniumnitrat, und die Lösung ist als flüssiger Volldünger für die Landwirtschaft geeignet.

Zusammensetzung nach dem Neutralisieren (% Trockensubstanz) Ammoniumnitrat 53,54 %
Kaliumnitrat 0 %
Calciumnitrat 14,53 %
Magnesiumnitrat 6,58 %
$CaCl_2$ 3,90 %
KCl 19,78 %
$MgCl_2$ 1,67 %

Beispiel 3

## Wasserenthärtung durch Kationen-und Anionenaustausch

Die Wasserenthärtung wird in drei zylinderförmigen Ionenaustauschern der im Beispiel 1 angegebenen Maße vorgenommen. In einen der Ionenaustauscher werden 0,46 m³ Kationenaustauscherharz VARION KS eingefüllt, in die beiden anderen je 0,46 m³ Anionenaustauscherharz VARION AD (Matrix: Poly-(Styrol,Divinylbenzol), aktive Gruppe: Alkanol N$^+$). Die beiden Anionenaustauscher sind parallelgeschaltet, der Kationenaustauscher mit ihnen in Reihe. Das zu enthärtende Wasser durchströmt zunächst den Kationenaustauscher mit einer Geschwindigkeit von 45 m/h, dann die beiden Anionenaustauscher mit einer Geschwindigkeit von 22,5 m/h. Die Leistung beträgt 13,8 m³·h, die Wassertemperatur 18 °C.

| Ion | vor | nach |
|---|---|---|
| | der Enthärtung | |
| Natrium (Mol/m³) | 0,46 | 0,46 |
| Kalium (Mol/m³) | 0,09 | 4,41 |
| Calcium (Mol/m³) | 1,44 | 0,006 |
| Magnesium (Mol/m³) | 0,72 | 0,002 |
| Eisen + Mangan (g/m³) | 0,3 | 0,3 |
| Hydrogencarbonat | 3,70 | 0,01 |
| Chlorid (Mol/m³) | 0,54 | 4,85 |
| Sulfat (Mol/m³) | 0,32 | 0,01 |
| Nitrat (Mol/m³) | 0,01 | 0,003 |

Nachdem 159,7 m³ Wasser enthärtet worden sind, wird die Anlage regeneriert. Zur Regenerierung der Kationenaustauscher wird aus 180 kg Kaliumchlorid-Kunstdünger (Qualität gemäß ungarischem Standard MSZ 6275, d.h. hoher KCl-Gehalt, geringe Korngröße) mit 1,8 m³ Wasser unter Erwärmen auf 30 °C eine Lösung bereitet. Alle drei Ionenaustauscher werden mit dieser Lösung regeneriert, wobei die Strömungsgeschwindigkeit 2,5 m/h beträgt und die Strömungsrichtung die gleiche wie beim Beladen ist.

Die Regenerierung wird in beiden Fällen mit einem Chemikalienüberschuß von 250 % vorgenommen. (Eigene Untersuchungen ergaben, daß VARION KS eine Nutzkapazität von 0,75 Mol/l, VARION AD eine Nutzkapazität von 0,37 Mol/l hat.)

Das vom Auflockerungs-und Waschwasser getrennt aufgefangene Regenerat hat folgende Zusammensetzung:

Kaliumchlorid 7,10 %

Calciumhydrogencarbonat 1,60 %

Magnesiumhydrogencarbonat 0,93 %

Calciumsulfat 0,37 %.

Das Kalium ist ein pflanzliches Hauptnährelement, auch Calcium-und Magnesiumsalze werden von den Pflanzen aufgenommen. Das Regenerat ist insbesondere zum Düngen von sauren Böden geeignet. Es kann jedoch auch auf die im Beispiel 1 beschriebene Weise zum Tränken von Torf verwendet werden.

## Beispiel 4

## Völlige Entsalzung

Von drei Ionenaustauschervorrichtungen (Höhe 2000 mm, Durchmeser 625 mm) werden zwei mit je 0,46 m³ Anionenaustauscherharz VARION AD und der dritte mit 0,46 m³ Kationenaustauscherharz VARION KS gefüllt. Die Anionenaustauscher sind parallelgeschaltet, der Kationenaustauscher ist ihnen in Reihe vorangeschaltet. Die Kationenaustauscher werden im H$^+$-Zyklus, die Anionenaustauscher im OH$^-$-Zyklus betrieben. Zwischen Anionen-und Kationenaustauscher ist eine Luftblasenlage zum Entfernen des im sauren Medium aus dem Hydrogencarbonat ebtstehenden Kohlendioxyds vorgesehen. Das zu enthärtende Wasser durchläuft den Kationenaustauscher mit einer Geschwindigkeit von 45 m·h, die Anionenaustauscher mit einer Geschwindigkeit von 22,5 m·h. Bei einem Durchsatz von 13,8 $m^3$·h werden 159,7 $m^3$ Wasser entsalzen.

| Ion | vor | nach |
|---|---|---|
| | völliger Entsalzung | |
| Natrium ($Mol/m^3$) | 0,48 | 0,00 |
| Kalium ($Mol/m^3$) | 0,08 | 0,00 |
| Calcium ($Mol/m^3$) | 1,44 | 0,00 |

| Ion | vor | nach |
|---|---|---|
| | völliger Entsalzung | |
| Magnesium ($Mol/m^3$) | 0,72 | 0,00 |
| Fe + Mn ($g/m^3$) | $< 0,3$ | 0,00 |
| Hydrogencarbonat ($Mol/m^3$) | 3,70 | 0,00 |
| Chlorid ($Mol/m^3$) | 0,54 | 0,00 |
| Sulfat ($Mol/m^3$) | 0,32 | 0,00 |
| Nitrat ($Mol/m^3$) | 0,01 | 0,00 |
| spezifische elektrische Leitfähigkeit ⟋uS/cm | | $< 1$ |

Der Kationenaustauscher wird mit 8 %iger Salpetersäure, der Anionenaustauscher mit 4,45 %igem Ammoniak regeneriert, wobei die Strömungsgeschwindigkeit 3 m/h beträgt und ein 250 %iger Chemikalienüberschuß zum Einsatz kommt.

Das Regenerat hat folgende Zusammensetzung (% Trockengehalt):

Ammoniumnitrat 57.76 %

Calciumnitrat 23,50 %

Magnesiumnitrat 10,62 %

Ammoniumsulfat 4,21 %

Natriumnitrat 2,03 %

Ammoniumchlorid 1,44 %

Kaliumnitrat 0,45 %

Jede Komponente ist stickstoffhaltig; der Ammoniumstickstoff hat eine dauerhafte Wirkung, der Nitratstickstoff wirkt sofort.

An dieser Stelle sei bemerkt, daß die Regenerierung der Kationenaustauscher in $H^+$-Form zweickmäßig von der Jahreszeit abhängend vorgenommen wird. Im Herbst ist die Kali-Phosphor-Düngung üblich, deshalb sollte im Herbst mit Phosphorsäure regeneriert werden, während im Frühling (Kali-Stickstoff-Düngung) die Verwendung von Salpetersäure vorzuziehen ist.

Beispiel 5

Trinkwasserbereitung

Die Qualität des Trinkwassers ist in Standards vorgeschrieben. Die an die Gesamthärte und den Gesamtsalzgehalt gestellten Anforderungen können mittels der in den vorhergehenden Beispielen beschriebenen Technologien erfüllt werden. Der ungarische Trinkwasserstandard (MSZ 450/l) schreibt vor, daß die Gesamthärte zwischen 1,786 und 12,5 $Mol/m^3$ zu liegen hat. Geht man von einem Wasser der Gesamthärte 25,0 $Mol/m^3$ aus mit dem Ziel, daraus angenehmes Trinkwasser (5 $Mol/m^3$ Gesamthärte) zu bereiten, so genügt es, 80 % dieses Wassers zu enthärten.

**Ansprüche**

1. Umweltfreundliches Verfahren zur Regenerierung von Ionenaustauschern und der landwirtschaftlichen Nutzung des Regenerates, dadurch gekennzeichnet, daß man als regenerierende Flüssigkeit die wässrige Lösung von pflanzliche Hauptnährelemente enthaltenden Salzen, vorzugsweise handelsüblichen Kunstdüngern, und/oder ebenfalls pflanzliche Nährelemente enthaltenden Säuren und/oder Laugen verwendet, das anfallende Regenerat notwendigenfalls neutralisiert und entweder direkt als flüssigen Kunstdünger ausbringt oder als Zusatz zu Düngerkompositionen verwendet.

2. Verfahren nach Anspruch 1, dadurch gekennzeichnet, daß man Kationenaustauscher, gegebenenfalls zusammen mit Anionenaustauschern, mit der Lösung von Kaliumchlorid-Kunstdünger regeneriert.

3. Verfahren nach Anspruch 2, dadurch gekennzeichnet, daß man die Regenerierlösung mit warmem Wasser bereitet und eine Konzentration von etwa 5-15 Masse% einstellt.

4. Verfahren nach Anspruch 1, dadurch gekennzeichnet, daß man in der partiellen Carbonatbeseitigung erschöpfte Kationenaustauscher in $K^+$-und $H^+$-Form gleichzeitig regeneriert, und zwar die $H^+$-Form mit wässriger Salpetersäure oder Phosphorsäure und die $K^+$-Form mit der wässrigen Lösung eines kaliumhaltigen Düngersalzes, die Regenerate vereinigt, mit Ammoniak oder Kalilauge neutralisiert und die erhaltene, an pflanzlichen Nährstoffen reiche Lösung in der Landwirtschaft als Kunstdünger nutzt.

5. Verfahren nach Anspruch 1, dadurch gekennzeichnet, daß man im Prozeß der völligen Entsalzung erschöpfte Ionenaustauscher in $H^+$-und $OH^-$-Form gleichzeitig regeneriert, und zwar den Anionenaustauscher mit Ammoniak oder Kaliumhydroxyd, den Kationenaustauscher mit Salpeter-oder Phosphorsäure, und die erhaltene komplexe Kunstdüngerlösung in der Landwirtschaft als flüssigen Kunstdünger nutzt.

6. Verfahren nach Anspruch 4 oder 5, dadurch gekennzeichnet, daß man die Kationenaustauscher in $H^+$-Form im Frühjahr mit Salpetersäure, im Herbst mit Phosphorsäure regeneriert.